**Europäisches Patentamt**

(19) **European Patent Office**

**Office européen des brevets**

(11) Numéro de publication: **0 143 060**

**B1**

(12) # FASCICULE DE BREVET EUROPÉEN

(45) Date de publication du fascicule du brevet:
10.06.87

(21) Numéro de dépôt: **84420151.7**

(22) Date de dépôt: **13.09.84**

(51) Int. Cl.⁴: **A 23 C 19/068,** A 23 C 19/14,
A 23 C 19/064

(54) Procédé pour la fabrication d'un fromage à pate pressée.

(30) Priorité: **15.09.83 FR 8314889**

(43) Date de publication de la demande:
**29.05.85 Bulletin 85/22**

(45) Mention de la délivrance du brevet:
**10.06.87 Bulletin 87/24**

(84) Etats contractants désignés:
**AT CH DE GB IT LI**

(56) Documents cité:
**DE-C-671 692**
**FR-A-2 063 928**

**J.G. DAVIS: "Cheese", vol. III, "Manufacturing methods", pages 744-745, Churchill Livingstone, Londres, GB;**
**MISSET'S "ZUIVEL", vol. 67, no. 9, 28 février 1961, pages 176-177; P. TIERSMA: "De appenzeller kaas"**
**R. SCOTT: "Cheesemaking practice", 1981, pages 424-425, Applied Science Publishers Ltd., Londres, GB;**

(73) Titulaire: **ENTREMONT S.A. Société dite:, 25 Faubourg des Balmettes, F-74000 Annecy (FR)**

(72) Inventeur: **Daime, Maurice, 10 chemin de la Prairie, F-74000 Annecy (FR)**

(74) Mandataire: **Laurent, Michel, 20 rue Louis Chirpaz Boîte postale no. 32, F-69131 Ecully Cedex (FR)**

EP 0 143 060 B1

## Description

L'invention concerne un procédé pour la fabrication d'un fromage à pâte préssée, demi-cuite notamnent, en vue de l'aromatiser à coeur.

Dans les fromages à pâte préssée demi-cuite le goût est essentiellement conféré par la durée de l'affinage et les soins administrés pendant cette opération. Malheureusement, cet affinage, d'une part, nécessite du personnel spécialisé, et d'autre part et surtout, s'étale sur plusieurs mois, généralement entre douze et dix-huit mois. Il s'agit donc d'une technique coûteuse, tant par les soins requis, que par le stockage qu'elle nécessite.

On a proposé bien évidemment de réduire la durée de cet affinage. Si l'on conserve encore au fromage sa texture, en revanche, celui-ci perd très rapidement son goût.

Alors, pour donner de la saveur à ce type de fromage, on a proposé de les aromatiser lors même du cycle de fabrication du caillé. Malheureusement, comme on le sait, pendant cette operation, la partie la plus importante des matières traitées, à savoir près des neuf dixièmes, est écartée et seulement le dixième des matières manipulées conduit au fromage, le reste se présentant le plus généralement sous forme de lactosérum. Aussi, si l'aromatisation est effectuée à ce stade du procédé de fabrication, le lactosérum sera fortement aromatisé, puisqu'il retiendra même l'essentiel des aromes, de sorte que les fromages fabriqués ainsi seront peu aromatises. En revanche, le lactosérum provenant de cette opération sera rendu totalement impropre à des transformations ultérieures. Cette technique n'a donc pû être exploitée industriellement.

L'invention pallie ces inconvénients. Elle vise un procédé d'aromatisation des fromages à pâte pressée, notamment des fromages à pâte pressée demi-cuite, qui soit économique, facile à mettre en oeuvre, n'entraîne pas des effets seconds, notamment sur le lactosérum, et surtout permette de réduire considérablement la durée d'affinage, ce qui se traduit donc par une économie financière substantielle.

Le procédé de fabrication selon l'invention d'un fromage à pâte pressée demi-cuite dans lequel on traite la surface dudit fromage démoulé en cours d'élaboration au moyen d'une saumure jusqu'à l'apparition d'une couche colorée visqueuse de morge est <u>caractérisé</u> en ce qu'il consiste:

- à traiter ensuite cette morge à l'aide d'une composition d'aromatisation ayant le même goût et les mêmes qualités que ladite morge et contenant également des agents renforçateurs de goût;
- puis à arrêter cette opération de morgeage lorsque ladite composition d'aromatisation a pénétré au coeur du fromage;
- et enfin, à soumettre les meules ainsi traitées à une projection d'eau claire froide sous pression.

Le "morgeage" est une opération bien connue dans l'industrie fromagère. Sommairement elle consiste à traiter la surface d'un fromage à pâte cuite ou demi-cuite fraîchement préssée, au moyen d'une composition de lactosérum et de saumure. Cette opération est effectuée à la main lors du retournement des meules de fromage. Elle est régulièrement répétée jusqu'à l'apparition d'une peau visqueuse fortement colorée, notamment en rouge ou en brun, qui recouvre alors tout le fromage. A cet instant des bactéries se sont développées à la surface du fromage qui, sous l'effet du sel contenu dans la saumure, vont transformer la couche visqueuse en une couche rigide après séchage.

Comme on le sait, les agents d'aromatisation sont des composés naturels ou artificiels destinés à apporter aux aliments le goût et l'odeur. Selon la caractéristique de l'invention, les agents d'aromatisation utilisés présentent le même goût que la morge du fromage en cours d'élaboration. Il importe évidemment que de tels agents répondent aux normes alimentaires et soient compatibles avec les réglementations relatives aux fromages.

- Le composition d'aromatisation contient également des agents renforçateurs de goût par exemple au goût de la noisette.

Avantageusement, en pratique:
- la composition d'aromatisation se présente sous forme d'une solution aqueuse salée;
- l'ensemble de la composition d'aromatisation et des agents renforçateurs de goût est mis en solution alcoolique; on a constaté que parfois la combinaison des agents renforçateurs de goût et des agents d'aromatisation accélérait le processus d'élaboration des fromages;
- la composition aqueuse d'aromatisation est diluée à raison de un pour mille à partir d'une solution à dix pour cent dans l'alcool;
- de manière connue, on traite la surface du fromage en cours d'élaboration à l'aide de cette composition, notamment à la main au moyen d'une serpillère, lors du retournement des meules de fromage en cours d'élaboration;
- ce traitement est effectué à raison de deux fois par semaine, pendant trois à six mois;
- enfin, on élimine la morge formée avant de préemballer le fromage obtenu.

Il est connu de traiter des fromages à pâte pressée cuite en cours d'élaboration au moyen d'une composition d'arômes dissous dans du vin blanc ou de l'alcool. Il s'agit de la technique de fabrication du fromage suisse connu sous le nom de Appenzel. Mais ici, il s'agit d'une technique qui vise à donner à ce fromage un goût autre que celui qu'il a initialement. Par ailleurs, la durée d'élaboration de ce fromage reste la même, c'est-à-dire de l'ordre de douze à dix-huit mois.

En revanche, l'invention vise à raccourir la durée d'affinage tout en conservant au produit d'origine le même goût subtil de morge gui est fortement recherché par le consommateur.

En d'autres termes, les objectifs, les fonctions et les résultats de l'invention sont différents de celle de cette technique de fabrication du fromage Appenzel.

L'opération de morgeage s'effectue, comme déjà dit, de manière connue, et ce au moyen d'une saumure saturée jusqu'à obtention de la couche visqueuse caractéristique fortement colorée en rouge ou en brun. On effectue ce traitement dans des caves fortement saturées en humidité à une température voisine de 12°C, et ce pendant une durée de deux à quatre semaines.

Lorsque la couche caractéristique visqueuse colorée apparaît on traite au moyen d'une deuxième saumure contenant environ 150 g par litre de sel dans de l'eau, à laquelle on ajoute une composition aromatique sur de l'alcool ayant le même goût et les mêmes qualiés que la morge. Cette composition d'aromatisation est formée d'arômes naturels cultivés sur du sel et dissous dans de l'alcool. Cette composition alcoolique est dissoute à raison de dix pourcent puis est diluée à raison de un pour mille dans la saumure.

Au moyen d'une serpillère, on applique cette composition sur la surface visqueuse du fromage et ce à raison de deux fois par semaines pendant quatre semaines lors des retournements du fromage en cours d'élaboration.

Ensuite, on trempe le fromage dans une troisième saumure contenant également environ 150 g de sel par litre d'eau, mais à température ambiante et ce pendant trente à soixante minutes. La morge gonfle alors en se saturant d'eau.

On sort ensuite les meules du bain de traitement et on les lave à l'eau claire jusqu'à éliminer complètement la morge.

On finit par un trempage dans de l'eau claire à température comprise en 50 et 70°C pendant cinq à quinze minutes afin de redonner la couleur jaune paille à la croute de la meule de fromage.

Le fromage ainsi obtenu est prêt à être préemballé.

La manière dont l'invention peut être réalisée et les avantages qui en découlent ressortiront mieux des exemples de réalisation qui suivent donnés à titre indicatif et non limitatif.

### Exemple 1

De manière connue, on élabore une meule en pâte demi-cuite préssée.

De façon connue, on morge la surface de cette meule, dans une cave saturée en humidité à 12°C, pendant trois semaines à l'aide d'une saumure.

Dès que la couche visqueuse colorée caractéristique de morge apparaît, on traite cette morge à l'aide d'une deuxième saumure contenant environ 150 g de sel par litre d'eau et dans laquelle on a dilué à raison de un pour mille une composition également diluée à raison de dix pourcent dans l'alcool contenant un arôme de noisette et un arôme naturel cultivé sur sel et dissous dans l'alcool ayant le même goût et les mêmes qualités que la morge.

On traite à l'aide de cette composition à la main, à la serpillère, à raison de deux fois par semaine, pendant quatre semaines, lors des retournements.

Au bout de quatre semaines, la composition d'aromatisation a pénétré à coeur.

On démorge alors par trempage de la meule de fromage dans un bain saturé de sel à température ambiante, contenant environ 150 g de sel par litre d'eau. La morge se gonfle alors en se saturant d'eau au bout de trente à soixante minutes.

On sort ensuite la meule du bain de trempage, puis on traite cette meule à l'eau claire froide projetée sous une pression comprise entre cinq et dix kilos par centimètre carré, afin d'éliminer totalement par voie mécanique la morge qui a été formée.

Enfin, on trempe la meule dans de l'eau claire à 50-60°C et ce pendant sept minutes environ, afin de redonner à la meule la couleur jaune paille caractéristique de la croute.

La meule obtenue est alors prête pour être préemballée.

### Exemple 2:

On répète l'exemple 1, mais en traitant dès le démoulage la pâte pressée demi-cuite simultanément avec la première et la deuxième saumures caratéristiques de l'invention.

On n'obtient alors aucun résultat, pas même l'apparition d'un morgeage. On pense que la composition d'aromatisation se comporte alors comme un anti-catalyseur.

### Exemple 3:

On répète l'exemple 1, en ne traitant à l'aide de la deuxième saumure caractéristique de l'invention, que lorsque la croûte de morge est formée.

On n'obtient aucun effet si ce n'est un ramollissement préjudiciable de cette croûte.

### Exemple 4:

On répète l'exemple 1, mais en introduisant des agents aromatisants lors de la fabrication même de la pâte demi-cuite et au cours de la cuisson de celle-ci.

Le lactosérum éliminé lors du pressage représente les neuf dixièmes de la quantité de matières traitées.

Après morgeage et affinage, le fromage obtenu ne présente pratiquement aucun parfum et aucun goût particulier.

En revanche, la lactosérum qui a été éliminé est, comme déjà dit fortement parfumé, ce qui le rend totalement impropre à la plupart des transformations ultérieures.

Le procédé selon l'invention présente de nombreux avantages par rapport aux techniques utilisées jusqu'à ce jour, notamment celle connue pour la fabrication de l'Appenzel. On peut citer:

- la possibilité de donner le goût que l'on desire à un fromage à pâte pressée demi-cuite;
- la possibilité de prévenir des fromages parfumés ayant leur goût définitif et ce sans attendre la fin de l'opération d'affinage; ainsi, de manière tout-à-fait inattendue on obtient ce goût par exemple en seulement quatre mois, alors que pour obtenir par l'affinage traditionnel le même goût, il aurait fallu le traiter pendant douze à dix-huit mois; cela se traduit donc par une économie plus que substantielle dans les stocks nécessaires;
- la possibilité de donner à des fromages moyens le goût naturel et subtil d'un fromage de première qualité;
- bref, la possibilité de diriger le goût du fromage et de raccourcir le temps d'affinage et par conséquent les risques techniques et financiers encourus.

## Revendications

1. Procédé pour la fabrication d'un fromage à pâte pressée demi-cuite, dans lequel on traite la surface dudit fromage démoulé en cours d'élaboration au moyen d'une saumure jusqu'à l'apparition d'une couche colorée visqueuse de morge, caractérisé en ce qu'il consiste:
- à traiter ensuite cette morge à l'aide d'une composition d'aromatisation ayant le même goût et les mêmes qualités que ladite morge et contenant également des agents renforçateurs de goût;
- puis à arrêter cette opération de morgeage lorsque ladite composition d'aromatisation a pénétré au coeur du fromage;
- et enfin, à soumettre les meules ainsi traitées à une projection d'eau claire froide sous pression.

2. Procédé selon la revendication 1, caractérisé en ce que la composition d'aromatisation est en solution aqueuse salée.

3. Procédé selon les revendications 1 et 2, caractérisé en ce que la composition agueuse d'aromatisation est diluée à raison de un pour mille à partir d'une solution à dix pourcent dans de l'alcool contenant l'agent d'aromatisation ayant le même goût et les mêmes qualités que la morge et l'agent renforçateur de goût.

4. Procédé selon les revendications 1 à 3, caractérisé en ce que le traitement par la composition d'aromatisation est effectué à raison de deux fois par semaine pendant trois à six semaines, lors du retournement des meules en cours d'élaboration.

5. Procédé selon l'une des revendications 1 à 4, caractérisé en ce que lorsque la composition d'aromatisation a pénétré à coeur, on trempe la meule:
- tout d'abord dans un bain saturé de sel, à température ambiante pendant trente à soixante minutes;
- puis ensuite, dans de l'eau claire à 50-60° C pendant cinq à dix minutes.

## Patentansprüche

1. Verfahren zur Herstellung eines Käses aus einer gepreßten, halbgebrannten Masse, bei dem die Oberfläche des entformten Käses im Verlaufe der Reifung mittels einer Salzlösunk bis zur Ausbildung einer farbigen viskosen Schmierschicht (Morge) behandelt wird, gekennzeichnet durch die Schritte:
- nacholgendes Behandeln der Schmierschicht mittels einer aromatisierenden Mischunk desselben Geschmacks und derselben Eingeschagten wie die der Schmierschicht, wobei die Mischung ebenfalls geschmacksverstärkende Mittel enthält;
- nachfolgendes Beenden des vorgenannten Schrittes der Schmierschichtbildung, wenn die aromatisierende Mischung bis in das Innere des Käses eingedrungen ist;
- beaufschlagen der so behandelten Laibe mit einem Guß von klarem, kalten unter Druck stehendem Wasser.

2. Verfahren nach Anspruch 1, dadurch gekennzeichnet, daß die aromatisierende Mischung eine wässrige Salzlösung ist.

3. Verfahren nach Anspruch 1 und 2, dadurch gekennzeichnet, daß die wässrige aromatisierende Mischung im Verhältnis 1:1000, ausgehend von einer 10%igen Lösung in Alkohol mit einem aromatisierenden Mittel, verdünnt wird, wobei die Mittel denselben Geschmack und dieselben Eigenschaften wie die Schmierschicht und das geschmacksverstärkende Mittel aufweisen.

4. Verfahren nach den Ansprüchen 1 bis 3, dadurch gekennzeichnet, daß die Behandlung mittels der aromatisierenden Mischung 2mal pro Woche während 3 bis 6 Wochen während des Wendens der Laibe im Verlaufe der Reifung ausgeübt wird.

5. Verfahren nach einem der Ansprüche 1 bis 4, dadurch gekennzeichnet, daß wenn die aromatisierende Mischung in das Innere eingedrungen ist, die Laibe gebadet werden:
-zunächst in einem gesättigten Salzbad bei Umgebungstemperatur während 30 bis 60 Minuten;
- danach in klarem Wasser von 50° bis 60°C während 5 bis 10 Minuten.

## Claims

1. Process for the production of a semi-cooked pressed cheese, in which the surface of said cheese removed from the mold and being processed, is treated with a brine until a viscous colored layer of cheese smear appears, characterized in that it consists:
- in thereafter treating said cheese smear with a flavoring composition having the same flavor and the same qualities as saidcheese smear, and further containing flavor-reinforcing agents:
- then in stopping said cheese smearing operation when said flavoring composition has penetrated to the core of the cheese;
- and finally, in subjecting the cheeses thus treated to a spray of pressurized cold clear water.

2. Process according to claim 1, characterized in that the flavoring composition is in aqueous salted solution.

3. Process according to claims 1 and 2, characterized in that the aqueous flavoring composition is diluted in the proportion of one for one thousand and of a ten per cent solution in an alcohol containing the flavoring agent having the same flavor and the same qualities as the cheese smear and the flavor-reinforcing agent.

4. Process according to claims 1 to 3, characterized in that the treatment with the flavoring composition is conducted at the rate of twice a week for three to six weeks, when the cheeses in production are turned over.

5. Process according to one of claims 1 to 4, characterized in that when the flavoring composition has penetrated through to the core, the cheese is soaked:
- first in a salt-saturated bath, at room temperature, for thirty to sixty minutes;
- and then, in clear water at 50-60° C, for five to ten minutes.